# EUROPEAN PATENT SPECIFICATION

(11) **EP 1 400 569 B1**
(45) Date of publication and mention of the grant of the patent: **12.04.2006**
(21) Application number: 03020155.2
(22) Date of filing: 05.09.2003
(51) Int. Cl.: C08L 67/04, C02F 3/12, C02F 3/30, C02F 11/02

(54) **Process to obtain biodegradable polymers from waste and enriched activated sludge**
Verfahren zur Herstellung biologisch abbaubarer Polymere aus Abfällen und belebtem Schlamm
Procédé pour la production de polyméres biodegradables a partir de déchet et boues activées

(30) Priority: 06.09.2002 IT RM20020444
(43) Date of publication of application: 24.03.2004
(73) Proprietor: UNIVERSITA' DEGLI STUDI DI ROMA "LA SAPIENZA", 00185 Roma (IT)
(72) Inventor: Majone, Mauro, 00154 Roma (IT); Beccari, Mario, 00119 Roma (IT); Petrangeli Papini, Marco, 00185 Roma (IT); Dionisi, Davide, 03100 Frosinone (IT)
(74) Representative: Gervasi, Gemma

(56) References cited:
- WO-A-01/36652
- PATENT ABSTRACTS OF JAPAN vol. 015, no. 361 (C-0867), 12 September 1991 (1991-09-12) & JP 03 143397 A (TAISEI CORP), 18 June 1991 (1991-06-18)
- PATENT ABSTRACTS OF JAPAN vol. 018, no. 301 (C-1210), 9 June 1994 (1994-06-09) & JP 06 062875 A (TAISEI CORP), 8 March 1994 (1994-03-08)
- PATENT ABSTRACTS OF JAPAN vol. 016, no. 020 (C-0902), 20 January 1992 (1992-01-20) & JP 03 236784 A (TAISEI CORP), 22 October 1991 (1991-10-22)

## Description

### Field of the invention

The present invention relates to a process to obtain biodegradable polymers from waste and enriched activated sludge under non-stationary conditions.

### state of the art

The biodegradable plastic materials obtained from polyhydroxyalkanoates (PHA) are among the most interesting since said polymers have similar properties to those of polypropylene: they can be processed in the same way and can be used, at least in part, as its substitute. To this end, polyhydroxybutyrate (PHB) and its copolymers are particularly promising, in particular polybetahydroxybutyrate/valerate (PHBN), manufactured in the past by ICI under the name Biopol.

The biological processes used initially to obtain these polymers were based on pure cultures of highly specialized microorganisms and synthetic substrates (for example *Alcaligenes eutrophus* and glucose, respectively), factors which contributed to rendering its cost too high (1). To overcome these problems a process was established (described in (2) and (3)) based on enriched microbial consortia (mixed cultures), continuous culturing (even if periodical) and using prefermented organic waste as substrate.

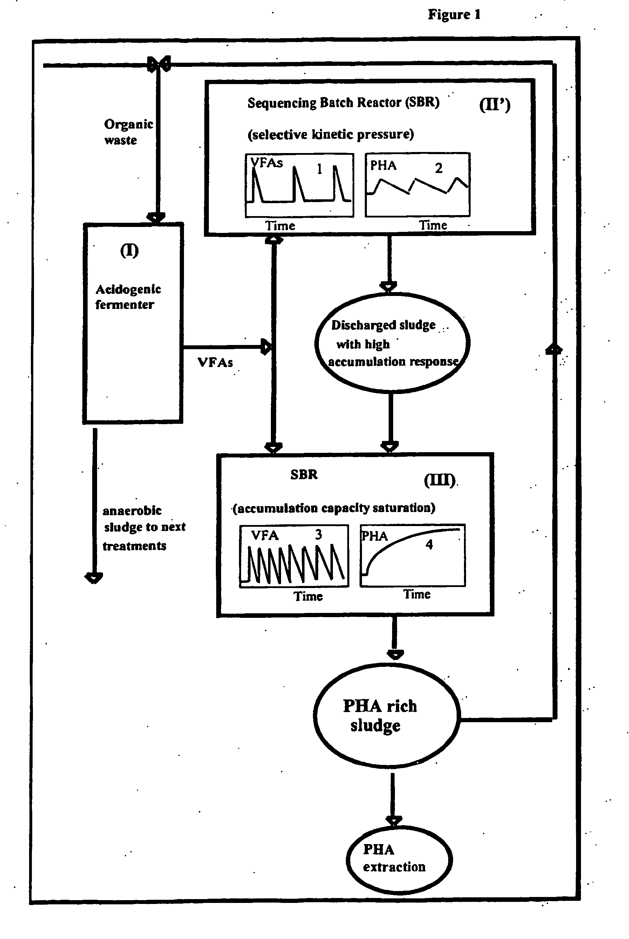

By virtue of the use of mixed cultures, equipment costs are much lower due to the absence of sterilization, as are the costs connected with the selection, maintenance and growth of the culture: in this respect the process itself is designed so that the more effective microorganisms are selected rather than the others. In addition the use of mixed cultures facilitates the use of waste (with its own microbial load) as substrate. The substrate therefore becomes available at zero or negative cost, which is different from previously cited processes where glucose, propionate or molasses and pure microorganism cultures are used. In the process schematic illustrated in Fig. 1, feed for enriching and producing the consortium and for the production of PHA is obtained in stage (I) by means of acidogenic fermentation, i.e. conversion of waste or concentrated waste waters to volatile fatty acids (VFA), substrates of choice for accumulating PHA. This also enables a sufficiently concentrated feed to be obtained to achieve high organic loads even under intermittent feed conditions. Acidogenic fermentation is a preliminary stage which does not introduce substantial economic burdens, being an already well-established operation and acting as the first stage in the stabilization and disposal of the waste. Finally, the use of continuous operations and of non-sterile conditions renders the proposed process more "robust" and easier to control.

The process is based on the production of microbial consortia with a high capacity to accumulate PHA, selected from activated sludges by specific feed conditions (periodic batch feed in a Sequencing Batch Reactor, SBR). The accumulation of PHA is in this respect a typical form of rapid physiological adaptation that many microorganisms activate under conditions where there is a sudden excess of carbon substrate: in the SBR, the periodic alternation of feed with excess and non-excess substrate (substrate deficiency) generates a selective pressure of kinetic type, as a consequence of which those populations which present a more rapid and greater accumulation capacity are automatically selected within the microbial consortium. In Fig 1, stage (II') illustrates the SBR operation method, typical VFA and PHA profiles being reported as functions of time in graphs 1 and 2. The operating conditions are hence such as to maintain the desired microbial consortium stable within the SBR and to induce accumulation of PHA as the principle removal mechanism for the carbon substrate. The result is that, for every feed cycle, the carbon substrate is converted by the microbial consortium into new PHA rich biomass. The fraction of biomass produced in excess can be removed and destined for PHA recovery, while the remaining biomass remains available for the subsequent cycle.

The key point of the process is the periodicity of the feed: this must be such as to maintain a strong alternation between excess and deficiency of substrate in that the selective pressure thus derived is vital in maintaining the specialised microbial consortium stable at a high PHA accumulation capacity. On the other hand, though vital, the non-feed phase (substrate deficiency) leads to internal consumption of the accumulated PHA, with subsequent reduction of net conversion yield of the substrate into PHA. The process is nevertheless conducted by carefully selecting the organic load value (feed quantity per unit of time and volume) at which it operates, in that it should be as high as possible (to allow high biomass productivity i.e. quantity of biomass per unit of time and volume), but without compromising the maintenance of adequate selective pressure (ensuring that the biomass produced has sufficient accumulation capacity and that it is greater at less high loads). In studies published up to now by this research group (2, 3) the maximum organic load applied in the SBR was 8.5 gCOD/l/d. Under such conditions the feed provided is not sufficient to obtain a biomass with high PHA content and consequently the process requires a subsequent stage (stage (III)) necessary for saturating the accumulation capacity of the biomass and obtaining a high PHA content.

Therefore according to the known art (see. Fig. 1), the PHA production process is a 3 stage process in which:
- the first stage (stage (I)) is the acidogenic fermentation of solid organic waste to produce the organic acid mixture, substrate of choice for the synthesis of PHA,
- the function of the second stage (stage (II')) is selecting and producing with sufficient productivity a specialised biomass at high accumulation rate and yields by means of culturing in a reactor with intermittent feed (SBR) operating with medium to high organic load. The need for maintaining altemating excess and deficiency of biodegradable COD has limited until now the organic load to values which are not excessively high (8.5 gCOD/I/d)
- and the function of the third stage (stage (III)) is to increase the PHA content of the biomass produced. This is obtained by feeds repeated rapidly in time so that there is always excess biodegradable COD (with typical VFA and PHA profiles reported as a function of time in graphs 3 and 4) until accumulation capacity is saturated (around 50% by weight). The PHA rich sludge leaving stage (III) is then fed to extraction after separation from the liquid medium, which is recirculated to the front end of the plant.

The said three stage process nevertheless has a critical stage in that, as indicated above, it is based on a compromise between two extremes which are difficult to operate and even more difficult to predict: operating conditions such as to produce in the second stage the maximum quantity of biomass but having poor selectivity, i.e. poor capacity for accumulating PHA; or operating conditions such as to produce less biomass but having high selectivity.

Up until now the expert in the field did not have available the technical knowledge allowing him to predict the optimum process conditions regarding the two aforesaid operating conditions. Therefore a three stage process became necessary, although complex to manage from the industrial point of view.

Now the inventors have surprisingly found that, by operating with greater organic loads than those described in the cited literature (8.5 gCOD/I/d) the second and third stages can be unified into a single stage of polymer production, with notable simplifications to the management of the process in its complexity and with simultaneous simplification of the relative plant.

### Summary of the invention

It is therefore an object of the present invention a process according to claim 1 for producing biodegradable polymers using microbial consortia capable of accumulating PHA, which are selected and produced from activated sludges by means of periodic batch feeding in a sequencing batch reactor (SBR), in which the first stage is a classic acidogenic fermentation stage and the second is conducted at high organic load, equal to or greater than 20 gCOD/I/d.

Other objects will become evident from the detailed description of the invention.

### Brief description of the figures

Fig. 1 shows a schematic of the three stage process of the known art.
Fig. 2 shows a schematic of the two stage process according to the invention.

### Detailed description of the invention

According to the invention that stage of the process which selects and produces sludge with high accumulation response and high intracellular polymer content, by means of alternating conditions of excess and deficiency of substrate, must be conducted at the maximum possible organic load, compatible with the need to maintain a high selective pressure on the biomass to ensure its accumulation performance. The experimentation conducted has shown that said conditions can be obtained by operating at an organic load of at least 20 gCOD/I/d, preferably greater that 30 gCOD/I/d (COD=Chemical Oxygen Demand, measurement method described in (4)), even more preferably greater than 50 gCOD/I/d, obtaining in a single reaction stage high biomass yields with a sufficiently high internal PHA content. Under such conditions biomass may be obtained in concentrations equal to at least 5.5 gVSS/I (VSS=Volatile Suspended Solids, measurement method described in (4)) with an internal maximum polymer content equal to at least about 35% (COD/COD). The biomass produced in excess consequently has a PHA content that can be sufficient for the direct recovery of the polymer without an additional accumulation capacity saturation stage.

The process of the invention uses specialised microbial consortia (mixed cultures) with high accumulation response, enriched and produced from activated sludges by means of particular and specific operating conditions (intermittent feed in Sequencing Batch Reactor, SBR), described as follows. The feed, composed mainly of volatile fatty acids at high concentration is obtained by means of acidogenic fermentation of solid organic waste, as described for example in (5), such as for example the organic part of solid urban refuse selected at source (i.e. without paper, plastic, glass, metal etc.) or other waste of an organic nature (such as waste derived from the agricultural industry).

The polymer thus obtained can then be extracted and processed according to procedures traditionally used for this type of polymer (6).

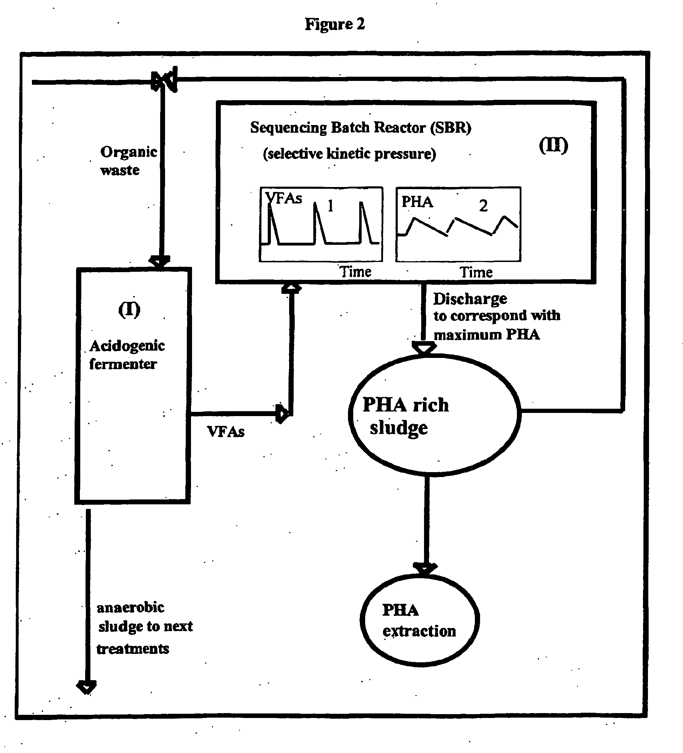

The process of the invention can be conducted in a plant which operates according to the schematic given in Fig. 2. The fundamental stages are:
(i) stage (I), conducted in an anaerobic fermenter fed with waste, for example solid urban refuse selected at source (as described in (5));
(ii) stage (II), conducted in an aerobic reactor operating by the SBR (Sequencing Batch Reactor) method. The SBR method, whose fundamentals are described in (7), includes a continuous but non-stationary operation, formed of ideritical repeated cycles, each subdivided into a plurality of differentiated phases comprising feed, reaction and discharge phases. In the process here described the feed is effected within the first ten minutes of each cycle and the discharge is effected in correspondence with the complete removal of the biodegradable COD contained in the feed (said complete removal is identified by measuring the concentration of dissolved oxygen, as described hereinafter). The discharge is effected in absence of sedimentation (to avoid needlessly lengthening the cycle and thus reducing biomass productivity). The SBR is fed with the effluent of stage (I), in accordance with the following operational conditions:
   - organic load not less than 20 gCOD/I/d
   - feed concentration not less than 20 gCOD/I

It has been found that, with an organic load of about 20 gCOD/I/d and feed concentration of about 20 gCOD/I, the optimum duration of each cycle is typically about 2 hours.

In the process according to the invention, hydraulic residence time (ratio of reactor volume to entering flow rate) is typically not greater than 1 day, the age of the sludge (ratio of biomass present in the SBR to biomass discharge flow rate) corresponding to the hydraulic residence time (in the absence of sedimentation). The process is conducted under strictly aerobic conditions, with agitation such as to maintain the culture in suspension and to allow sufficient dissolved oxygen concentration to be maintained, for example greater than 2 mg/l, under continuous monitoring.

The inoculum to be used to initiate the reactor is normal activated sludge which can be withdrawn from the discharge flow of any activated sludge purifying plant. The necessary time required for the reactor to attain stable operating conditions from inoculation is usually fairly short (about one week).

Further recovery operations on the PHA rich sludge and subsequent PHA purification and extraction are conventional and known to the expert of the art. Operating under such conditions the process allows biomass to be produced with a productivity of at least 5.5 gVSS/l/d and with a PHA content around 35% (COD/COD).

To enable the reactor, according to the aforementioned description, to operate under cyclically intermittent feed conditions, the intracellular polymer content varies during the cycle, being maximum when the biodegradable COD content of the feed has been completely removed and minimum at the end of the cycle. Therefore the discharge of polymer rich biomass must be effected in correspondence with complete removal of biodegradable COD: the moment corresponding to said complete removal can be identified with precision by taking a simple measurement of the dissolved oxygen concentration in the reactor. The concentration will be maximum at the end of the cycle, decreasing during the removal of the COD and will show a rapid increase on complete removal of the COD: the discharge pump can therefore be used for measuring the dissolved oxygen.

By means of the process of the present invention biodegradable polymers can be produced, with specific advantages over processes used so far. In this respect by eliminating the biomass accumulation capacity saturation stage (stage (III) of the known art) there is the advantage, both from the construction and operation viewpoint, of simplifying the process and of relative plant, due to the elimination of one stage in the reaction.

The PHB/V copolymer also known as P(HB/HV) obtained by the process of the present invention has characteristics totally comparable with the analogous PHAs obtained with traditional processes. In particular the copolymer has a HV monomer percentage within the range 15-30% (optimal range in which the copolymer presents physical and mechanical properties similar to those of polypropylene (6)).

The following examples are given to better illustrate the invention and are not to be considered as limiting the scope thereof.

### Example

The experimentation took place in a SBR on a laboratory scale (useful volume about 2 litres) with stable performance for a period of about 2 months. The feed consisted of a synthetic mixture of acetic acid, propionic acid and lactic acid (total concentration 20 gCOD/l, in relative proportions 40:20:40 in terms of COD, simulating those obtained from acidogenic fermentation of solid urban refuse selected at source (5)). The expected performance of the two stage process (as shown in fig. 2), with organic load of 20 gCOD/l/d is reported in the following table (table 1).

The results shown in this example indicate that a copolymer P(HB/HV) can be obtained with productivity around 0.14 g/l/h and at concentrations of about 35% of the total biomass (in terms of COD). In principle the productivity of the process can be further increased by applying organic loads greater that those obtained in this laboratory example where it can be verified that even under such conditions the biomass selected maintains good accumulation properties.

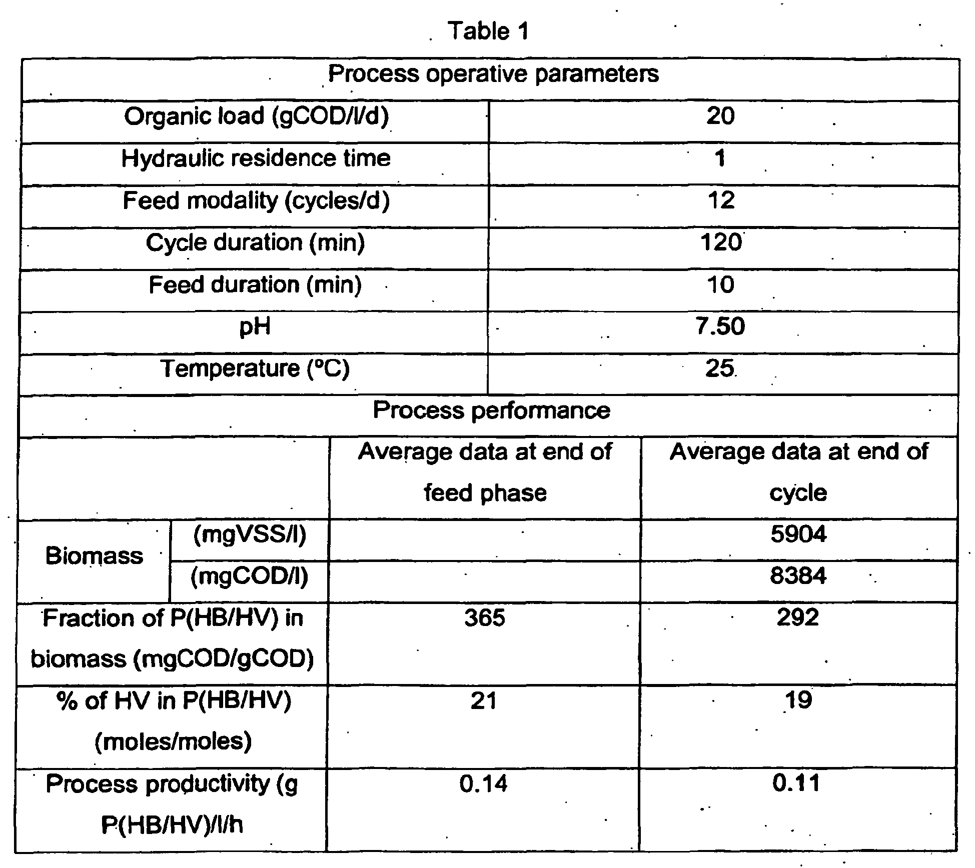

### BIBLIOGRAPHY

1. **A. J. Anderson, E.-A. Dawes (1990)** Occurrence, Metabolism, Metabolic Role and Industrial Uses of Bacterial Polyhydroxyalkanoates, Microbiological Reviews, 54, 450-472.
**2. M. Majone, M. Beccari, R. Ramadori (1999)** Biodegradable polymers from wastes by using activated sludges enriched by aerobic periodic feeding, *AIDIC Conference series* 4, 163-170, 1999.
**3. M. Majone, D. Dionisi (2001)** Synthesis of biodegradable polymers from wastes by a combined anaerobic/aerobic process, oral presentation at "1^{st} International Symposium on biotechnologies for environmental management", 22-24 November 2001, Villa Gualino, Turin, Italy.
**4. APHA (1995).** Standard Methods for the Examination of Water and Wastewater. *19th edn. American Public Health Association.* Washington D.C.
**5. Traverso P., Pavan P., Bolzonella D., Innocenti L., Cecchi F., Mata-Alvarez J. (2000).** Acidogenic fermentation of source separated mixtures of vegetable and fruit wastes from supermarkets. Biodegradation , 11, 407-414.
**6. D.L. Kaplan (ed.) (1998)** "Biopolymers from renewable resources" Springer-Verlag, Berlin Heidelberg, 1998.
**7. Wilderer P.A., Irvine R.L., Goronszy M.C. eds. (2001)** Sequencing batch reactor technology. *Scientific and technical report no. 10.* IWA Publishing, London, UK.

## Claims

1. Process to obtain biodegradable polymers, from waste and enriched activated sludge under non-stationary conditions comprising the following stages:
(i) stage (I), conducted in an acidogenic anaerobic fermenter fed with waste;
(ii) stage (II), conducted in an aerobic reactor fed with effluent from stage (I) and operating by the SBR method, i.e. such as to comprise a continuous but non-stationary periodic operation, formed of repeated identical cycles, each subdivided into a plurality of differentiated phases comprising feed, reaction and discharge in absence of sedimentation **in order to obtain an alternation between excess and deficiency of substrate,** said stage (II) being **characterised in that** the SBR is operated according to the following described operating conditions: **the initiation of the reactor is made with an inoculum extracted from an activated sludge plant, the** organic load is not less than 20 gCOD/I/d and feed concentration not less than 20 gCOD/I, **the discharge of the polymer rich biomass is effected in correspondence with the complete removal of biodegradable COD.**

2. Process according to claim 1 wherein the organic load is about 20 gCOD/I/d, the feed concentration is about 20 gCOD/I and the duration of each cycle is about 2 hours.

3. Process according to claim 1 wherein the organic load is not less than 30 gCOD/I/d.

4. Process according to claim 1 wherein the organic load is not less than 50 gCOD/I/d.

5. Process according to claims 1-4 wherein the feed is effected within the first ten minutes of each working cycle and the discharge is effected in correspondence with the complete removal of biodegradable COD contained in the feed.

6. Process according to claim 5 wherein the complete removal of COD is identified by measuring the concentration of dissolved oxygen in correspondence with the end of the cycle.

7. Process according to any of claims 1-6 wherein the biodegradable polymer obtained is a polyhydroxyalkanoate.

8. Process according to any of claims 1-6 wherein the biodegradable polymer is poly-hydroxybutyrate.

9. Process according to any of claims 1-6 wherein the biodegradable polymer obtained is the copolymer poly-betahydroxybutyrate/valerate.

## Patentansprüche

1. Verfahren um biologische abbaubare Polymere aus Abfällen und angereichertem aktiviertem Schlamm unter nicht stationären Bedingungen zu erhalten, umfassend die folgenden Stufen:
(i) Stufe (I), ausgeführt in einem säurebildenden, anaeroben Faulbehälter, der mit Abfällen gefüttert wird;
(ii) Stufe (II), ausgeführt in einem aeroben Reaktor, der mit dem Faulschlamm aus Stufe (I) gefüttert wird und mittels des SBR-Verfahrens betrieben wird, d.h. so, dass es einen kontinuierlichen aber nicht stationären periodischen Betrieb umfasst, der aus wiederholten identischen Zyklen gebildet wird, die jeweils in eine Vielzahl von unterschiedlichen Phasen unterteilt sind, umfassend Zuführung, Reaktion und Entladung in Abwesenheit von Sedimentation, um einen Wechsel zwischen Überschuss und Mangel an Substrat zu erhalten, wobei genannte Stufe (II) **dadurch gekennzeichnet ist, dass** der SBR (Sequence batch reactor) gemäß der im folgenden beschriebenen Arbeitsbedingungen betrieben wird: die Initiierung des Reaktors wird durch ein Inoculum ausgeführt, welches aus einer Anlage für aktivierten Schlamm extrahiert wird,, wobei die organische Belastung nicht weniger als 20 g CSB/I/d beträgt und die Zuführungskonzentration nicht weniger als 20 g CSB/I beträgt, wobei die Entladung an polymerreicher Biomasse in Übereinstimmung mit der vollständigen Entfernung des biologische abbaubaren CSB erfolgt.

2. Verfahren gemäß Anspruch 1, in welchem die organische Belastung etwa 20 g CSB/I/d beträgt, die Zuführungskonzentration etwa 20 g CSB/I beträgt und die Dauer von jedem Zyklus etwa 2 Stunden beträgt.

3. Verfahren gemäß Anspruch 1, in welchem die organische Belastung nicht weniger als 30 g CSB/I/d beträgt.

4. Verfahren gemäß Anspruch 1, in welchem die organische Belastung nicht weniger als 50 g CSB/I/d beträgt.

5. Verfahren nach einem der Ansprüche 1 - 4, in welchem die Zuführung innerhalb der ersten zehn Minuten von jedem Arbeitszyklus ausgeführt wird und die Entladung in Übereinstimmung mit einem vollständigen Entfernen des in der Zuführung enthaltenem biologisch abbaubaren CSB erfolgt.

6. Verfahren gemäß Anspruch 5, in welchem die vollständige Entfernung des CSB durch Messen der Konzentration an gelöstem Sauerstoff in Übereinstimmung mit dem Ende des Zyklus identifiziert wird.

7. Verfahren gemäß einem der Ansprüche 1 - 6, in welchem das biologisch abbaubare Polymer eine Polyhydroxyalkancarbonsäure ist.

8. Verfahren gemäß einem der Ansprüche 1 - 6, in welchem das biologisch abbaubare Polymer Polyhydroxybuttersäure ist.

9. Verfahren gemäß einem der Ansprüche 1 - 6, in welchem das erhaltene biologisch abbaubare Polymer das Copolymer Poly-(β-hydroxybuttersäure-cohydroxyvaleriansäure) ist.

## Revendications

1. Procédé pour la production de polymères biodégradables, à partir de déchets et de boues activées enrichies dans des conditions non stationnaires comprenant les étapes suivantes :
(i) une étape (I), réalisée dans un fermenteur anaérobie acidogène chargé en déchets ;
(ii) une étape (II), réalisée dans un réacteur aérobie chargé en effluent provenant de l'étape (I) et fonctionnant selon le procédé RBS, c'est-à-dire de sorte à comprendre un fonctionnement périodique continu mais non stationnaire, constitué de cycles identiques répétés, chacun subdivisé en une pluralité de phases différenciées comprenant l'alimentation, la réaction et l'évacuation en l'absence de sédimentation afin d'obtenir une alternance entre excès et insuffisance de substrat, ladite étape (II) étant **caractérisée en ce que** le RBS est utilisé selon les conditions de fonctionnement décrites ci-dessous : l'amorçage du réacteur est réalisé avec un inoculum extrait d'une station à boue activée, la charge organique n'est pas inférieure à 20 g DCO/l/d et la concentration de l'alimentation n'est pas inférieure à 20 g DCO/l, l'évacuation de la biomasse riche en polymère est effectuée en fonction de l'élimination complète de la DCO biodégradable.

2. Procédé selon la revendication 1 dans lequel la charge organique est d'environ 20 g DCO/l/d, la concentration de l'alimentation est d'environ 20 g DCO/l et la durée de chaque cycle est d'environ 2 heures.

3. Procédé selon la revendication 1 dans lequel la charge organique n'est pas inférieure à 30 g DCO/l/d.

4. Procédé selon la revendication 1 dans lequel la charge organique n'est pas inférieure à 50 g DCO/l/d.

5. Procédé selon les revendications 1 à 4 dans lequel l'alimentation est effectuée dans les dix premières minutes de chaque cycle de travail et l'évacuation est effectuée en fonction de l'élimination complète de la DCO biodégradable contenue dans l'alimentation.

6. Procédé selon la revendication 5 dans lequel l'élimination complète de la DCO est déterminée en mesurant la concentration d'oxygène dissous en fonction de la fin du cycle.

7. Procédé selon l'une quelconque des revendications 1 à 6 dans lequel le polymère biodégradable obtenu est un polyhydroxyalcanoate.

8. Procédé selon l'une quelconque des revendications 1 à 6 dans lequel le polymère biodégradable est un poly-hydroxybutyrate.

9. Procédé selon l'une quelconque des revendications 1 à 6 dans lequel le polymère biodégradable obtenu est le copolymère poly-bétahydroxybutyrate/valérate.
